# EUROPEAN PATENT SPECIFICATION

(11) **EP 0 661 133 B1**
(45) Date of publication and mention of the grant of the patent: **03.06.1998**
(21) Application number: 93830533.1
(22) Date of filing: 29.12.1993
(51) Int. Cl.: B23Q 39/02

(54) **A machining unit with a series of selectively operable tool-carrier mandrels**
Bearbeitungseinheit mit einer Reihe selektiv arbeitender Spannfutter
Unité de travail comportant une série des mandrins pour outils qui travaillent sélectivement

(43) Date of publication of application: 05.07.1995
(73) Proprietor: ME.C.AL. S.n.c. di MESCHINI ROSELLA, I-27030 Frascarolo (Pavia) (IT)
(72) Inventor: Cavezzale, Ennio, I 27030 Frascarolo - Pavia (IT); Gili, Renzo, I 27038 Robbio - Pavia (IT)
(74) Representative: Siniscalco, Fabio

(56) References cited:
- DE-A- 2 038 589

## Description

The present invention relates to a machining unit having a series of selectively operable tool-carrier mandrels according to the preamble of claim 1. Such a machining unit is known from DE-A-2 038 589.

Machining units are known which include a body on which a head is rotatably mounted to carry a series of tool-carrier mandrels arranged either along axes parallel to the axis of rotation of the head or radially relative to this axis.

These machining units have a predetermined working position. Once the tool for the operation (drilling, milling and the like) has been selected, a motor of the machining unit rotates the head until the mandrel carrying the selected tool is in the working position. A second motor then drives the tool, by means of coupling members which transmit drive from the second motor to the mandrel carrying the selected tool only when it is in the working position, while all the other mandrels remain disconnected from the second motor and therefore stationary.

Normally, the workpiece is held fixed and the selected tool carries out the operation along the axis corresponding to the predetermined working position.

The fact of being constrained to a predetermined working position means that only one surface of the workpiece may be worked. In order to work the other surfaces it is necessary to move the workpiece and this operation becomes somewhat awkward when the workpiece is large and heavy.

In order to work another surface of the workpiece, a 90° bevel gear is interposed between the mandrel and the tool. Obviously this bevel gear has to be fitted and removed from time to time resulting inevitably in increased operating times and costs.

On the other hand, complex operations are required to move the machining unit so as to work on different surfaces of the workpiece, meaning that only sophisticated and expensive robots would be ably to carry out this task.

The object of the present invention is to overcome the above limits and disadvantages of prior art machining units.

This object is achieved by providing a machining unit with a series of selectively operable tool-carrier mandrels, having a body on which a head is mounted for rotation and carries the mandrels with their axes extending radially and mutually spaced by a predetermined angle, one or more motors and drive elements for moving the selected mandrel into the working position by rotating the head and for operating the selected mandrel, a series of clutch means, each associated with a respective mandrel, characterised in that it includes a plurality of cooperating clutch means arranged with their axes extending radially and mutually spaced by a predetermined angle, connected to the motor provided to drive the selected mandrel by means of the associated drive elements, each of the cooperating clutch means being adapted to engage clutch means associated with a mandrel so as to transmit drive to the mandrel when the clutch means is aligned with the cooperating clutch means, the angular spacing of the clutch means being different from the angular spacing of the cooperating clutch means so that the alignment of a clutch means with a cooperating clutch means corresponds to misalignment of the other clutch means relative to the other cooperating clutch means.

In order to improve the understanding of the invention, a description follows of one embodiment, provided by way of non-limitative example and illustrated in the appended drawings, in which
Figure 1 is a partially sectioned front view of a machining unit according to the invention;
Figure 2 is a partially sectioned longitudinal view, in the direction of the arrow F of Figure 1, of the above machining unit;
Figure 3 is a longitudinal section of the above machining unit, taken on the line III-III of Figure 1;
Figure 4 is an enlarged, partly sectioned detail of Figure 3;
Figures 5, 6 and 7 are schematic front views of three operating positions of the machining unit; and
Figure 8 shows a work station using two machining units like the one described in the preceding drawings.

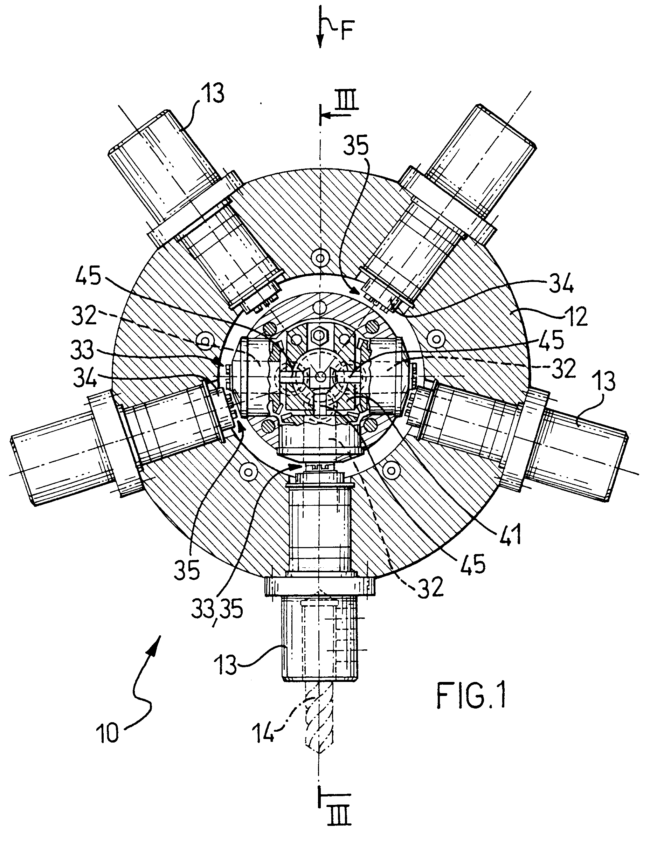

With reference to Figures 1, 2, 3, 4, the machining unit illustrated, generally indicated 10, includes a body 11 on which a head is rotatably mounted with a plurality of tool-carrier mandrels 13.

The mandrels 13 are arranged with their axes extending radially and spaced by predetermined angles. In the example illustrated there are five mandrels arranged at the same 72° angle from each other. Each mandrel 13 is adapted to carry a tool which is securely fixed to it in a known manner: Figures 1 to 4 show, as an example of tool, a twist drill 14 mounted on a mandrel 13.

A first electric motor 15 is housed in the body 11 for rotating the head 12 and moving a selected mandrel 13 into a working position. A second electric motor 16 is also housed in the body 11 for rotating the selected mandrel 13 for working.

The motor 15 is drivingly coupled to the head 12 in the following manner.

The drive shaft of the motor 15 is rotatably coupled by means of a series of pinions 17 to a gear wheel 18 fixed to a ring 19. The ring 19 is coupled to a sleeve 21 by a helical coupling 20 which is partly visible in the drawings and generally indicated 20. The sleeve 21 is slidable on a fixed cylindrical member 22 and is rotatably fixed to the head 12 by means of pins 23 which allow it to move axially relative to the head.

The motor 16 is drivingly coupled to the selected mandrel 13 in the following manner.

The drive shaft of the motor 16 is coupled to the end of an additional shaft 24 by means of two pulleys 25, interconnected in turn by a driving belt 26. A central gear 27 meshing with three peripheral gears 28 is fixed to the other end of the shaft 24. Each peripheral gear 28 is fixed coaxially to a bevel gear 29 meshing with the bevel teeth 30 of a hub 31. A cylindrical clutch member 32 is housed in the hub 31 and is fixed for rotation with it and axially slidable relative to it. Each clutch member 32 has frontal teeth 33 on the opposite end from the bevel teeth 30. The axes of the three clutch members 32 extend radially and lie in the same plane as the radial axes of the mandrels 13; two of the clutch members 32 are arranged at an angle of 180° to each other along a horizontal axis, while the third clutch member is arranged at 90° to the other two along a vertical axis. A cylindrical clutch boss 34, corresponding to the clutch member 32 and having a set of frontal teeth 35 matching the set of frontal teeth 33 of the clutch member 32, is coaxially fixed to each mandrel 13. When the clutch boss 34 of the selected mandrel 13 and a clutch member 32 are aligned, the two sets of teeth 35 and 33 engage, as will be seen later, thereby drivingly coupling the motor 16 and the said mandrel 13.

A longitudinal seat 36 is formed in the fixed member 22, along the sliding direction of the sleeve 21, and a rod 37 is slidingly housed therein. A transverse pin 38 is fixed to one end of the rod 37 and extends outside the seat 36 by a portion onto which a roller 39 is mounted for rotation. This roller 39 fits into an annular groove 40 in the sleeve 21. A cursor 41 is fixed to the other end of the rod 37 from the pin 38, slidable along a guide bar 42. Three dovetail-shaped guide grooves 43 are formed in the cursor 41, inclined to the same angle and converging with the sliding axis of the cursor 41, each groove 43 arranged to correspond with a respective clutch member 32. Each clutch member 32 is mounted for rotation on a shaft 44, to one end of which is fixed a coupling element 45 which slidingly engages a respective groove 43 in the cursor 41; in order to achieve this slidable engagement, an end portion of this coupling element 45 is inclined like the respective groove 43 and is shaped like a solid dovetail, matching the hollow dovetail shape of this groove 43. The clutch member 32 is resiliently held axially on the shaft 44 by a spring 46 which acts on the clutch member 32 in the direction of removal of the member 32 from the shaft 44, and resists against a catch integral with the shaft 44 and by an additional catch integral with the shaft 44 and against which the member 32 abuts under the thrust of the spring 46.

The machining unit 10 described above and illustrated in the drawings operates as follows.

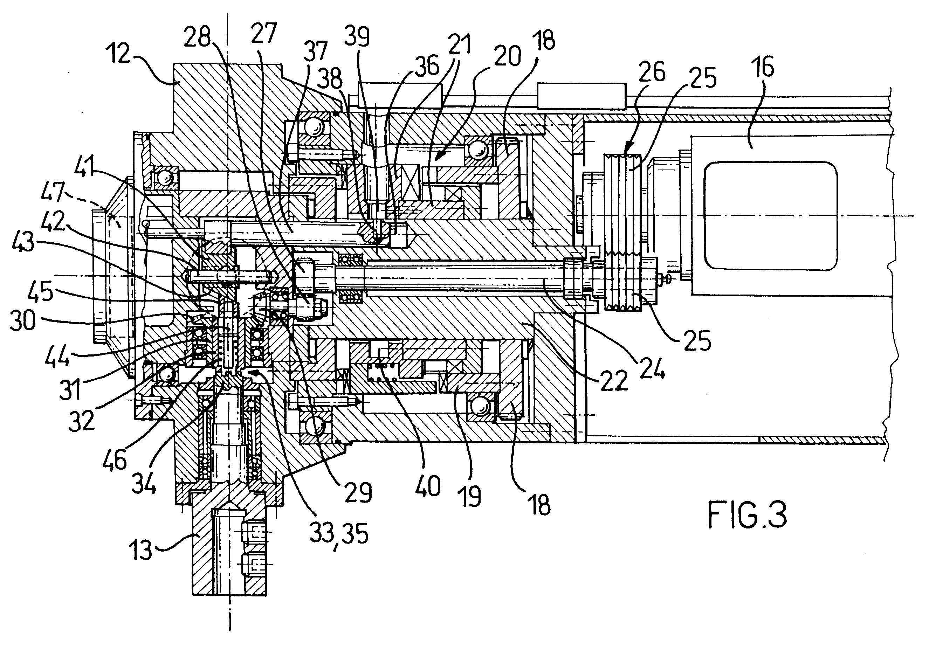

Supposing the machining unit is in the condition shown in Figures 1, 3, in which a clutch boss 34 of a mandrel 13 is coupled to a clutch member 32, with the respective sets of teeth 35 and 33 engaged the one with the other, and it is supposed that one wants to activate and work with another mandrel 13 by connecting its clutch boss 34 to another clutch member 32.

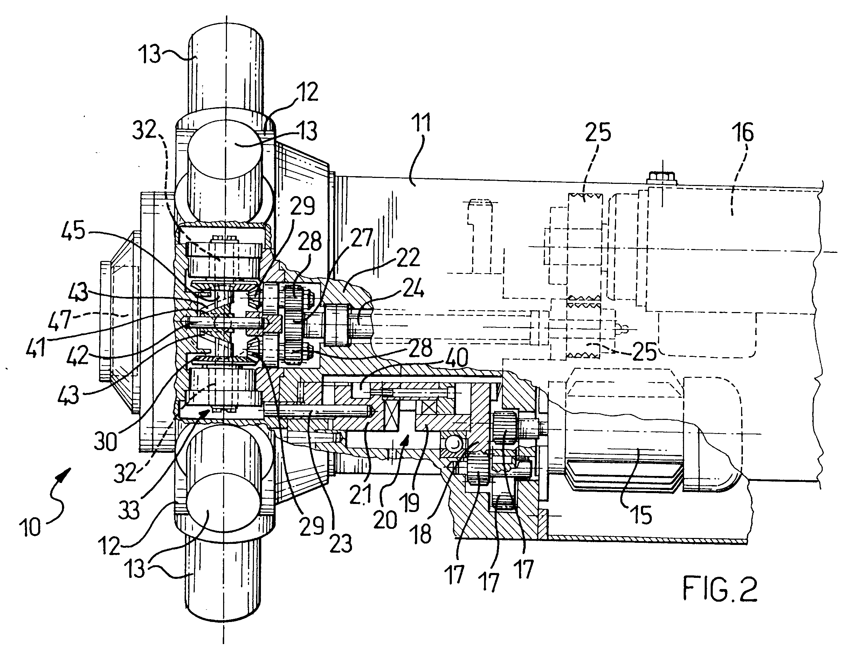

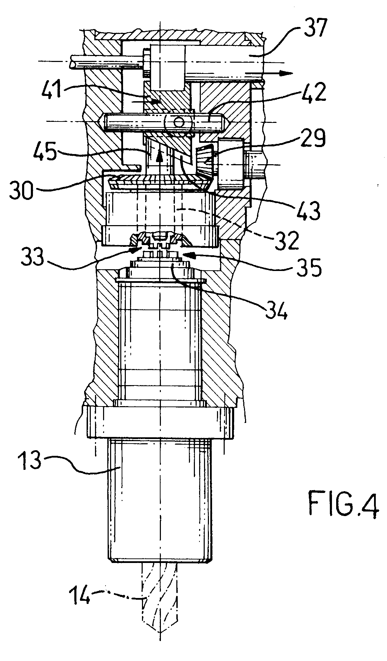

First the motor 15 is activated, which makes the ring 19 rotate by means of the pinions 17 and the gear wheel 18. The sense of rotation of the ring 19 and the helical coupling between the ring itself and the sleeve 21 are such that the sleeve translates to the right, as shown in Figures 2,3, until it bears against the gear wheel 18. In this translation movement the sleeve 21 carries with it to the right the rod 37 thanks to the interconnection between the pin 38 and the roller 39. At the same time, the rod 37 moves to the right the cursor 41 which is fixed to it. The three grooves 43 in the cursor 41 slide on the respective end portions of the coupling elements 45 of the three shafts 44; the three grooves 43 are inclined in such a way as to draw back the shafts 44 with the clutch members 32 radially towards the cursor 41 in such a way as to uncouple, by separating the respective sets of teeth 33 and 35, the clutch member 32 and the clutch boss 34, Figure 4 clearly showing that these were coupled.

The further rotation of the motor 15 causes the sleeve 21 to rotate together with the gear wheel 18, as the sleeve is bearing against this gear wheel. The sleeve 21 is free to rotate relative to the rod 37 because the annular groove 40 slides freely on the roller 39. In its rotation, the sleeve 21 causes rotation of the head 12 to which it is attached by means of the pins 23. The rotation of the motor 15 and therefore of the head 12 is stopped when the clutch boss 35 of the selected mandrel 13 is aligned with the selected clutch member 32. In order to determine the correct position, an angular-position detector, using sliding contacts, is provided, which is illustrated schematically and indicated 47; this device 47 has contacts fixed to the fixed member of the machining unit 10 and contacts fixed to the rotatable head 12 and the closing of these contacts allows it, in a known manner, to determine the angular position of the mandrels 13 relative to the clutch members 32.

The stopped motor 15 is put into reverse so that, in a similar manner to the above, the sleeve 21 together with the rod 37 and the cursor 41 translate to the left and the clutch members 32 move away radially from the cursor 41 and the selected clutch member 32 may couple with the clutch boss 34 of the selected mandrel 13 by engagement of the respective sets of teeth 33 and 35.

At this point, the motor 15 is definitively stopped and the motor 16 is activated and drives the selected clutch member 32 and with it the selected mandrel 13, transmitting rotary motion through the drive train formed by the pulleys 25 and the connecting transmission belt 26, the shaft 24, the central gear 27 and the peripheral gear 28, the bevel gear 29 and the toothed hub 31 associated with the selected clutch member 32.

When the selected clutch member 32 moves away from the cursor 41 and makes contact with the clutch boss 34 of the selected mandrel 13, the frontal teeth 33 and 35 do not necessarily mesh with each other. In any case, the spring 46 resiliently holds the clutch member 32 against the clutch boss 34, so that the teeth 33 resiliently press against the teeth 35. As soon as the clutch member 32 begins to rotate, the teeth 33 automatically mesh with the teeth 35 so as to transmit drive from the clutch member 32 to the clutch boss 34.

The electric motors 15 and 16 and the device 47 for detecting the angular position of the head 12 are connected to an electric control and command unit, not shown, associated with the machining unit 10. This electric unit, which is activated from a special control panel, controls and commands the operating sequence described above.

If another mandrel 13 and/or another clutch member 32 is to be selected to work with, the machining unit 10, given the appropriate command, will carry out the same operating sequence as that described above.

As may be seen from Figure 1, the mutual angular arrangement of the mandrels 13 is different from the mutual angular arrangement of the clutch members 32 so that when one clutch boss 34 is aligned with a clutch member 32 the other clutch bosses 34 are out of alignment with the other clutch members 32. Therefore, when the selected clutch member 32 transmits drive to the clutch boss 34 of the selected mandrel 13, the other clutch members 32 are disengaged and rotate freely while the other clutch bosses 34 are also disengaged and their respective mandrels 13 are still, thus preventing any accidents to the operator.

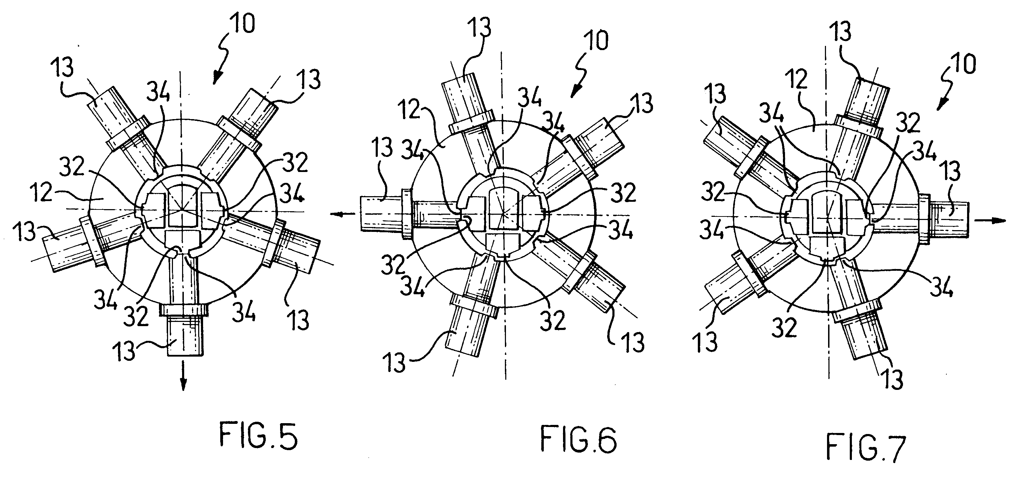

In accordance with the above description, each mandrel 13 may move, as shown in Figures 5, 6, 7, into three different working positions shown by the arrows, to be precise: one vertical downwards position, one horizontal leftwards position and one horizontal rightwards position. In this manner, it is possible to work on several surfaces of the same workpiece with the machining unit 10, by means of simple translations of the unit itself, with particular reference to the above positions, it is possible to work on an upper surface, a left lateral surface and a right lateral surface. This is achieved without having to mount a bevel gear on the mandrels or resorting to sophisticated robots to move the workpiece, as discussed in the introduction.

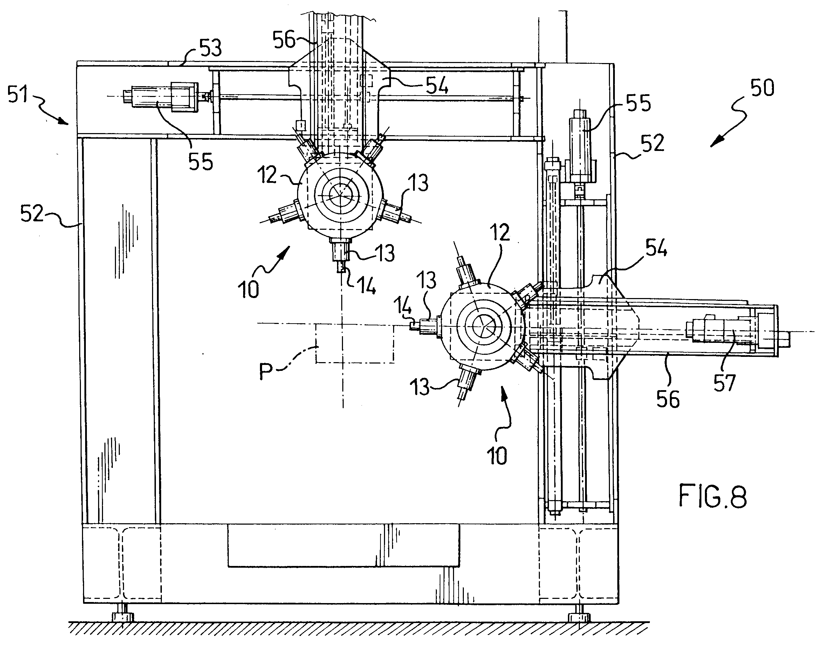

Figure 8 shows a work station, generally indicated 50, using two machining units 10. The station 50 includes a portal structure 51 formed by two uprights 52 and a horizontal member 53 connecting them. A slide 54 is mounted for vertical sliding on the right hand upright 52 and driven by an electric motor 55, a frame 56 is mounted on the slide 54 for horizontal sliding, slidably driven by an electric motor 57 and carrying on one end one of the two machining units 10. Similar movement elements are provided on the horizontal member 53 for the other machining unit 10; the same reference numbers as those used above are used for the partially illustrated movement elements associated with the upright 53; in this case the opposite applies: the slide 54 slides horizontally and the frame vertically.

In this manner, one machining unit 10 can move vertically along the right hand upright 52 and horizontally perpendicular thereto, while the other machining unit 10 can move horizontally along the horizontal member 53 and vertically perpendicular thereto.

The workpiece, illustrated by a chain line and indicated P, and having by way of example a rectangular section, is placed within the portal structure 51 in correspondence with the two machining units 10. It is easy to see that by suitably angling the heads 12 of the two machining units 10 and by suitably moving these units by means of their movement elements, it is possible to work on all surfaces of the workpiece P.

Even a very long workpiece P may be worked in this way, by being passed through the portal structure 51 and worked length by length.

Variations and additions may obviously be made to the embodiment described above and illustrated in the drawings.

The number of mandrels and of clutch members may be varied according to requirements. Even the angular spacing of clutch members may by varied according to requirements. For example, four clutch members may be provided, angularly spaced by 90°.
The motors and drive mechanisms shown may be replaced by equivalent motors and drive mechanisms. For example, a single motor may be used to drive the rotatable head and the mandrels by means of one or more power-assisted clutches which enable the driving of the head to be disconnected from the driving of the mandrels. The motor or the motors do not necessarily need to be electric but may be of another type, for instance hydraulic or pneumatic. However the embodiment described here and illustrated in the drawings proves to be rational, efficient and relatively inexpensive.

Variations may also be made to the mechanical system provided to engage and disengage the clutch members and the clutch bosses of the mandrels. For example, in order to couple the inclined grooves of the cursor with the inclined-surface elements connected to the clutch members, equivalent coupling profiles may be used.

A mechanical clutch system which is functionally equivalent to that illustrated may also be used, even though the latter proves simple and efficient.

Alternatively, a pneumatic, hydraulic or electromagnetic clutch system may also be used.

The device for detecting the angular position of the head may be of either optical or magnetic type.

As far as the work station described above and illustrated in the drawings, using two machining units, is concerned the elements for moving the machining units may be of any type. A single machining unit may also be used in a work station of this type.

In general, one or more machining units, like that described above and illustrated in the drawings, and with any possible variants within the scope of the claims, may be used in a work station of any configuration. However the work station described here and illustrated in the drawings is particularly simple and practical.

## Claims

1. A machining unit with a series of selectively operable tool-carrier mandrels (13), having a body (11) on which a head (12) is rotatably mounted carrying the said mandrels (13) extending radially and mutually spaced by a predetermined angle, one or more motors (15, 16) and drive elements (17, 23, 24-30) for carrying the selected mandrel (13) into a working position by rotating the head (12) and for driving the selected mandrel (13), a series of clutch means (34), each associated with a respective mandrel (13), characterised in that it includes a plurality of radially extending cooperating clutch means (32), mutually spaced by a predetermined angle, connected to the motor (16) operable to drive the selected mandrel (13) by means of associated drive elements (24-30), each of the cooperating clutch means (32) being operable to engage clutch means (34) associated with one mandrel (13) for transmitting drive to the mandrel (13), when the clutch means (34) is aligned with the cooperating clutch means (32), the angular spacing of the clutch means (34) being different from the angular spacing of the cooperating clutch means (32) in order that alignment of one clutch means (34) with a cooperating clutch means (32) corresponds to misalignment of the other clutch means (34) relative to the other cooperating clutch means (32).

2. A machining unit according to Claim 1, in which engagement of the cooperating clutch means (32) with the clutch means (34) is achieved by means of an actuating device (41, 45) acting on the cooperating clutch means (32).

3. A machining unit according to Claim 2, in which the actuating device (41, 45) is associated with the drive elements (17, 23) which move the selected mandrel (13) into a working position.

4. A machining unit according to Claim 3, in which the actuating device includes a cursor (41) with guides (43) inclined to the sliding direction of the cursor (41), in which each cooperating clutch means (32) is fixed to the cursor (41) along one of the said guides by a coupling element (45), and in which the cursor (41) is connected to one (21) of the said drive elements (17-23) which move the selected mandrel (13) into a working position under the action of the associated motor (15), the said drive element (21) performing in sequence in the said actuation a retraction movement, a rotational movement as a result of rotation of the rotatable head (12), and an opposite return translation movement, in its retraction and return translational movements the said drive element (21) carrying the cursor (41) with it thereby causing the inclined guides (43) to slide on the coupling elements (45) of the cooperating clutch means (32), drawing back the cooperating clutch means (32) towards the cursor (41) in the retraction movement so as to separate the engaged clutch means (34) and cooperating clutch means (32), and moving the cooperating clutch means (32) away from the cursor (41) in the return translation movement so as to engage a predetermined cooperating clutch means (32) with the clutch means (34) of the selected mandrel (13).

5. A machining unit according to Claim 4, in which the said drive means is constituted by a sleeve (21) which is movable on a fixed member (22) of the machining unit, fixed for rotation to the head (12) and slidable axially thereof, connected to the motor (15) by a helical coupling (20).

6. A machining unit according to Claim 4, in which the cursor (41) is connected to the sleeve (21) by a rod(37) slidable in the said fixed member (22), the sleeve (21) being fixed for translation with the rod (37) but free to rotate with respect thereto.

7. A machining unit according to Claim 2, in which each cooperating clutch means (32) is resiliently mounted relative to the actuating device (41, 45) in order to exert a resilient pressure on the clutch means (34) when engaging with it.

8. A machining unit according to Claim 4, in which each cooperating clutch means includes a cylindrical member (32) with a set of frontal teeth (33) mounted for rotation but resiliently held axially on a shaft (44) fixed to the coupling element (45), and in which each clutch means is formed by a cylindrical boss (34) of the respective mandrel (13) having a set of frontal teeth (35) provided to mesh with the set of teeth (33) of the cylindrical member (32), this cylindrical member exerting resilient pressure on the cylindrical boss (34) upon engagement therewith.

9. A machining unit according either to Claim 1 or Claim 8, in which the motor (16) which drives the selected mandrel (13) is connected to the cooperating clutch means (32) by means of a central gear (27) meshing with peripheral gears (28) each of which are drivingly coupled to a respective cooperating clutch means (32).

10. A machining unit according to Claim 1, in which three cooperating clutch means (32) are provided, two being opposite each other along the same axis so as to define two work positions at 180° to each other, and the third being perpendicular to the other two so as to define a third working position at 90° to the other two positions.

11. A machining unit according to Claim 10, in which four cooperating clutch means are provided, equally spaced angularly so as to define four working positions at 90° to each other.

12. A machining unit according to Claim 1, in which a device (47) is provided for detecting the angular position of the head (12) so as to determine the alignment position of the clutch means (34) and the cooperating clutch means (32) which are to be engaged.

13. A work station using one or more machining units according to any one of the preceding Claims.

14. A work station according to Claim 13, including a portal structure (51) having two uprights (52) and a connecting horizontal member (53), a machining unit (10) being mounted on one upright (52) for movement on this upright (52) and perpendicular thereto, and another machining unit (10) being mounted on the horizontal member for movement along this member (52) and perpendicular thereto.

## Patentansprüche

1. Bearbeitungseinheit mit einer Reihe selektiv arbeitender Spannfutter (13) mit einem auf einem Körper (11) drehbar angeordneten Kopf (12), der die radial verlaufenden und um einen vorbestimmten Winkel voneinander beabstandeten Spannfutter (13) trägt, mit einem oder mehreren Motoren (15, 16) und Antriebselementen (17, 23, 24-30) zum Befördern des gewählten Spannfutters (13) in eine Arbeitsposition durch Drehen des Kopfes (12) und zum Antreiben des gewählten Spannfutters (13), mit einer Reihe von Kupplungsmitteln (34), von denen jedes einem entsprechenden Spannfutter (13) zugeordnet ist, dadurch gekennzeichnet, daß es eine Vielzahl von radial verlaufenden, zusammenwirkenden, um einen vorbestimmten Winkel voneinander beabstandeten Kupplungsmitteln (32) aufweist, die mit dem Motor (16) zum Antrieb des gewählten Spannfutters (13) mittels zugeordneter Antriebselemente (24-30) gekuppelt sind, wobei jedes der zusammenwirkenden Kupplungsmittel (32) mit dem einem Spannfutter (13) zugeordneten Kupplungsmittel (34) zum Antrieb des Spannfutters (13) in Eingriff kommt, wenn das Kupplungsmittel (34) mit dem zusammenwirkenden Kupplungsmittel axial ausgerichtet ist, wobei der Winkelabstand des Kupplungsmittels (34) vom Winkelabstand des zusammenwirkenden Kupplungsmittels (32) unterschiedlich ist, so daß die axiale Ausrichtung des einen Kupplungsmittels (34) mit einem zusammenwirkenden Kupplungsmittel (32) der Versetzung des anderen Kupplungsmittels (34) relativ zum anderen zusammenwirkenden Kupplungsmittel (32) entspricht.

2. Bearbeitungseinheit nach Anspruch 1, bei der der Eingriff des zusammenwirkenden Kupplungsmittels (32) mit dem Kupplungsmittel (34) durch eine auf das zusammenwirkende Kupplungsmittel (32) einwirkende Betätigungseinrichtung (41, 45) erzielt wird.

3. Bearbeitungseinheit nach Anspruch 2, bei der die Betätigungseinrichtung (41, 45) den Antriebselementen (17, 23) zugeordnet ist, die das gewählte Spannfutter (13) in eine Arbeitsposition befördern.

4. Bearbeitungseinheit nach Anspruch 3, bei der die Betätigungseinrichtung einen Läufer (41) mit in Gleitrichtung des Läufers (41) geneigten Führungen (43) aufweist, wobei jedes zusammenwirkende Kupplungsmittel (32) entlang einer dieser Führungen durch ein Kupplungselement (45) am Läufer (41) angebracht ist, und wobei der Läufer (41) mit einem (21) der Antriebselemente (17-23), die das gewählte Spannfutter (13) durch Beaufschlagung des zugeordneten Motors (15) in die Arbeitsposition befördern, gekuppelt ist, wobei das Antriebselement (21) während der Betätigung nacheinander eine rückziehende Bewegung, durch die Drehung des drehbaren Kopfes (12) eine Drehbewegung sowie eine entgegengesetzte Umkehrverschiebungsbewegung vornimmt, wobei das Antriebselement (21) bei den rückziehenden bzw. umgekehrten Verschiebungsbewegungen den Läufer (41) trägt, dergestalt, daß die geneigten Führungen (43) auf die Kupplungselemente (45) des zusammenwirkenden Kupplungsmittels (32) gleiten, wobei das zusammenwirkende Kupplungsmittel (32) in der Rückzugsbewegung zum Läufer (41) hin zurückgezogen wird, um den Eingriff des Kupplungsmittels (34) und des zusammenwirkenden Kupplungsmittels (32) zu lösen und das zusammenwirkende Kupplungsmittel (32) in umgekehrter Verschiebungsbewegung vom Läufer (41) weg zu bewegen, um ein vorbestimmtes zusammenwirkendes Kupplungsmittel (32) mit dem Kupplungsmittel (34) des gewählten Spannfutters in Eingriff zu bringen.

5. Bearbeitungseinheit nach Anspruch 4, in der das Antriebselement durch eine Muffe (21) gebildet wird, die auf einem festen Teil (22) der Bearbeitungseinheit bewegbar und drehbar am Kopf (12) zum Gleiten in Axialrichtung angeordnet ist und durch eine Schraubkupplung (20) mit dem Motor gekuppelt ist.

6. Bearbeitungseinheit nach Anspruch 4, in der der Läufer (41) durch einen in dem festen Teil (22) gleitbaren Stab (37) mit der Muffe (21) verbunden ist, wobei die Muffe (21) zur Verschiebung mit dem Stab (37) fest angeordnet, jedoch relativ zu diesem drehbar ist.

7. Bearbeitungseinheit nach Anspruch 2, in der jedes der zusammenwirkenden Kupplungsmittel (32) elastisch und relativ zur Betätigungseinrichtung (41, 45) angeordnet ist, um beim Eingriff mit dem Kupplungsmittel (34) einen elastischen Druck auf dieses auszuüben.

8. Bearbeitungseinheit nach Anspruch 4, in der jedes der zusammenwirkenden Kupplungsmittel zur Drehung ein zylindrisches Teil (32) mit einem Satz stirnseitiger Zähne (33) aufweist, das elastisch auf einer am Kupplungselement (45) angebrachten Welle (44) axial gehalten wird, und in der jedes Kupplungsmittel durch einen zylindrischen Vorsprung (34) des jeweiligen Spannfutters (13) mit einem Satz stirnseitiger Zähne (35) zum Eingriff mit den Zähnen (33) des zylindrischen Teils (32) gebildet wird, wobei das zylindrische Teil einen elastischen Druck auf den zylindrischen Vorsprung (34) nach Eingriff mit diesem ausübt.

9. Bearbeitungseinheit nach Anspruch 1 oder 8, in der der das gewählte Spannfutter (13) antreibende Motor (16) mittels eines mit umliegenden Getrieben (28) in Eingriff befindlichen zentralen Getriebes (27) mit dem zusammenwirkenden Kupplungsmittel (32) gekuppelt ist, wobei jedes der Getriebe antriebsmäßig mit einem jeweiligen zusammenwirkenden Kupplungsmittel gekuppelt ist.

10. Bearbeitungseinheit nach Anspruch 1, in der drei zusammenwirkende Kupplungsmittel (32) vorgesehen sind, wobei zwei gegenüberliegend entlang derselben Achse angeordnet sind, um so zwei um 180° zueinander gerichtete Arbeitspositionen anzugeben, und das dritte senkrecht zu den beiden anderen angeordnet ist, um so eine um 90° zu den beiden anderen Positionen ausgerichtete dritte Arbeitsposition anzugeben.

11. Bearbeitungseinheit nach Anspruch 10, in der vier zusammenwirkende Kupplungsmittel vorgesehen sind, die im gleichen Winkel zueinander beabstandet sind, um vier Arbeitspositionen um 90° zueinander anzugeben.

12. Bearbeitungseinrichtung nach Anspruch 1, in der eine Vorrichtung (47) zum Erfassen der Winkelposition des Kopfes (12) vorgesehen ist, zur Bestimmung der Ausrichtungsposition der in Eingriff zu bringenden Kupplungsmittel (34) und der zusammenwirkenden Kupplungsmittel (32).

13. Arbeitsstation mit einer oder mehreren Bearbeitungseinheiten nach einem der vorangegangenen Ansprüche.

14. Arbeitsstation nach Anspruch 13, mit einem Eingang (51) sowie zwei Pfosten (52) und einem waagrechten Verbindungsteil (53), einer auf einem der Pfosten (52) angeordneten Bearbeitungseinheit (10) zur Bewegung auf demselben in vertikaler Richtung, und einer weiteren auf dem waagrechten Teil angeordneten Bearbeitungseinheit (10) zur Bewegung entlang desselben in vertikaler Richtung.

## Revendications

1. Unité de travail comportant une série de mandrins (13) porte-outils fonctionnant sélectivement, comportant un corps (11) sur lequel une tête (12) est montée mobile en rotation, qui supporte lesdits mandrins (13) s'étendant radialement et qui sont mutuellement à une certaine distance angulaire prédéterminée les uns des autres, un ou plusieurs moteurs (15, 16) et des éléments d'entraînement (17, 23, 24 à 30) destinés à transporter le mandrin (13) sélectionné dans une position de travail en faisant tourner la tête (12) et à entraîner le mandrin (13) sélectionné, une série de moyens (34) formant embrayages, associés chacun à un mandrin (13) respectif, caractérisée en ce qu'elle comprend une pluralité de moyens (32) formant embrayages coopérants qui s'étendent radialement, qui sont à une certaine distance angulaire prédéterminée les uns des autres, reliés au moteur (16) fonctionnant de façon à entraîner le mandrin (13) sélectionné au moyen des éléments d'entraînement (24 à 30) associés, chacun des moyens (32) formant embrayages coopérants pouvant fonctionner de façon à s'engager avec le moyen (34) formant embrayage associé à un mandrin (13) pour transmettre l'entraînement au mandrin (13), lorsque le moyen (34) formant embrayage est aligné avec le moyen (32) formant embrayage coopérant, l'écartement angulaire du moyen (34) formant embrayage étant différent de l'écartement angulaire du moyen (32) formant embrayage coopérant afin que l'alignement d'un moyen (34) formant embrayage avec un moyen (32) formant embrayage coopérant corresponde au désalignement des autres moyens (34) formant embrayages par rapport aux autres moyens (32) formant embrayages coopérants.

2. Unité de travail selon la revendication 1, dans laquelle l'engagement du moyen (32) formant embrayage coopérant avec le moyen (34) formant embrayage est réalisé au moyen d'un dispositif de manoeuvre (41, 45) agissant sur le moyen (32) formant embrayage coopérant.

3. Unité de travail selon la revendication 2, dans laquelle le dispositif de manoeuvre (41, 45) est associé aux éléments d'entraînements (17, 23) qui déplacent le mandrin (13) sélectionné dans une position de travail.

4. Unité de travail selon la revendication 3, dans laquelle le dispositif de manoeuvre comprend un curseur (41) muni de guides (43) inclinés par rapport à la direction de coulissement du curseur (41), dans laquelle chaque moyen (32) formant embrayage coopérant est fixé au curseur (41) le long d'un desdits guides par un élément de couplage (45), et dans laquelle le curseur (41) est relié à l'un (21) desdits éléments d'entraînement (17 à 23) qui déplacent le mandrin (13) sélectionné dans une position de travail sous l'action du moteur (15) associé, ledit élément d'entraînement (21) effectuant successivement dans ladite manoeuvre un mouvements de rétraction, un mouvement de rotation en conséquence de la rotation de la tête (12) mobile en rotation, et un mouvement de translation de retour opposé, lors de ses mouvements de rétraction et de translation de retour, ledit élément d'entraînement (21) supportant le curseur (41) avec lui faisant en sorte ainsi que les guides inclinés (43) coulissent sur les éléments de couplage (45) du moyen (32) formant embrayage coopérant, ramenant le moyen (32) formant embrayage coopérant en arrière en direction du curseur (41) pendant le mouvement de rétraction de manière à séparer le moyen (34) formant embrayage et le moyen (32) formant embrayage coopérant engagés, et éloignant le moyen (32) formant embrayage coopérant du curseur (41) pendant le mouvement de translation de retour de manière à engager un moyen (32) formant embrayage coopérant avec le moyen (34) formant embrayage du mandrin (13) sélectionné.

5. Unité de travail selon la revendication 4, dans laquelle ledit moyen d'entraînement est constitué d'une douille (21) qui est mobile sur un élément fixe (22) de l'unité de travail, fixe vis à vis de toute rotation par rapport à la tête (12) et coulissante axialement le long de celle-ci, reliée au moteur (15) par un accouplement hélicoïdal (20).

6. Unité de travail selon la revendication 4, dans laquelle le curseur (41) est relié à la douille (21) par une tige (37) coulissante dans ledit élément fixe (22), la douille (21) étant fixe par rapport à toute translation avec la tige (37) mais libre de tourner par rapport à elle.

7. Unité de travail selon la revendication 2, dans laquelle chaque moyen (32) formant embrayage coopérant est monté de façon élastique par rapport au dispositif de manoeuvre (41, 45) afin d'exercer une pression élastique sur le moyen (34) formant embrayage lorsqu'il s'engage avec lui.

8. Unité de travail selon la revendication 4, dans laquelle chaque moyen formant embrayage coopérant comporte un élément cylindrique (32) muni d'un jeu de dents frontales (33) monté pour tourner mais maintenu de façon élastique axialement sur un arbre (44) fixé à l'élément de couplage (45), et dans laquelle chaque moyen formant embrayage est formé par une protubérance cylindrique (34) du mandrin (13) respectif comportant un jeu de dents frontales (35) prévu pour s'engrener au jeu de dents (33) de l'élément cylindrique (32), cet élément cylindrique exerçant une pression élastique sur la protubérance cylindrique (34) lors de son engagement avec elle.

9. Unité de travail selon soit la revendication 1, soit la revendication 8, dans laquelle le moteur (16) qui entraîne le mandrin (13) sélectionné est relié au moyen (32) formant embrayage coopérant au moyen d'un engrenage central (27) s'engrenant avec des engrenages périphériques (28), dont chacun est couplé par engrènement à un moyen (32) formant embrayage coopérant respectif.

10. Unité de travail selon la revendication 1, dans laquelle trois moyens (32) formant embrayages coopérants sont prévus, deux étant à l'opposé l'un de l'autre le long du même axe de façon à définir deux positions de travail à 180° l'une de l'autre, et le troisième étant perpendiculaire aux deux autres de façon à définir une troisième position de travail à 90° des deux autres positions.

11. Unité de travail selon la revendication 10, dans laquelle quatre moyens formant embrayages coopérants sont prévus, espacés angulairement de façon égale de façon à définir quatre positions de travail à 90° l'une de l'autre.

12. Unité de travail selon la revendication 1, dans laquelle un dispositif (47) est prévu pour détecter la position angulaire de la tête (12) de façon à déterminer la position d'alignement du moyen (34) formant embrayage et du moyen (32) formant embrayage coopérant qui doivent être engagés.

13. Poste de travail utilisant une ou plusieurs unités de travail selon l'une quelconque des revendications précédentes.

14. Poste de travail selon la revendication 13, comportant une structure formant portique (51) possédant deux montants (52) et un élément horizontal (53) de connexion, une unité de travail (10) étant montée sur un montant (52) de façon à se déplacer sur ce montant (52) et perpendiculairement à celui-ci, et une autre unité de travail (10) étant montée sur l'élément horizontal de façon à se déplacer le long de cet élément (52) et perpendiculairement à celui-ci.
